# FASCICULE DE BREVET EUROPEEN

(11) **EP 2 765 123 B1**
(45) Date de publication et mention de la délivrance du brevet: **20.01.2016**
(21) Numéro de dépôt: 13178141.1
(22) Date de dépôt: 26.07.2013
(51) Int. Cl.: C04B 35/626, B01F 7/00, B01F 15/06, B22F 1/00, B22F 3/22, B28B 1/24

(54) **Malaxeur Malaxage de matière première pour métallurgie des poudres**
Zwangsmischer von Rohstoff für die Pulvermetallurgie
Mixer for mixing raw materials for powder metallurgy

(43) Date de publication de la demande: 13.08.2014
(73) Titulaire: Comadur S.A., 2400 Le Locle (CH)
(72) Inventeur: Cartier, Damien, 25000 Besançon (FR)
(74) Mandataire: Giraud, Eric

(56) Documents cités:
- EP-A1- 0 956 918
- EP-A1- 2 338 590
- EP-A2- 1 344 593
- US-A1- 2004 217 524

## Description

### Domaine de l'invention

L'invention concerne un malaxeur pour la fabrication de granulés de type céramique appelés feedstock comportant, d'une part au moins une poudre inorganique d'au moins un élément de type oxyde ou cermet ou métal ou nitrure ou d'au moins un composé comportant au moins un desdits éléments, et d'autre part au moins un liant organique, ledit malaxeur comportant au moins une cuve dans laquelle est mobile au moins un moyen de malaxage, et comportant des moyens d'échange thermique. L'invention concerne encore un procédé de malaxage de matière première pour métallurgie des poudres, en particulier pour la fabrication de granulés feedstock d'un type de céramique donné à partir d'un mélange comportant au moins une poudre inorganique d'au moins un élément de type oxyde ou cermet ou métal ou nitrure ou d'au moins un composé comportant au moins un desdits éléments et au moins un liant.

L'invention concerne le domaine de la métallurgie des poudres pour l'obtention de céramiques, et en particulier le processus de malaxage du mélange de matières premières pour constituer un matériau intermédiaire appelé feedstock destiné à alimenter une presse par injection pour la mise en forme du composant à produire.

### Arrière-plan de l'invention

Dans la fabrication de matériaux durs pour la bijouterie et l'industrie horlogère, ou encore pour des applications techniques telles que le médical, l'électronique, la téléphonie, l'outillage, les plaquettes de coupe d'usinage, l'industrie des biens de consommation, et notamment en ce qui concerne des matériaux durs généralement désignés sous le nom générique de « céramiques » inorganiques, on met en oeuvre des techniques de métallurgie des poudres. On appellera ici « céramique » le matériau de synthèse inorganique obtenu, quelle que soit la nature de ce matériau, saphir, rubis, diamant artificiel, glace saphir, céramique, micro-aimant, métal, alliage, ou autre.

Les matières premières de base sont de différente nature, certaines sont tenues secrètes pour la protection des productions. De façon générale, les matières premières utilisées comportent au moins, d'une part de la poudre de céramique, et d'autre part des liants organiques tels que résines ou matières plastiques ou similaires qui permettent l'injection et la bonne tenue du composant réalisé avec le mélange de l'ensemble des matières premières; d'autres additifs peuvent être incorporés au mélange. On comprend que les matières premières peuvent être de différentes textures: solide, pulvérulente, liquide, ou encore pâteuse. Le mélange peut changer de structure au cours de son élaboration, en particulier, et non limitativement, quand des composants complémentaires d'une résine subissent une réaction de polymérisation.

Le procédé global de fabrication d'un composant céramique inorganique comporte au moins les étapes suivantes :
- préparation des matières premières ;
- mélange(s) des matières premières, ou/et pré-mélange deux à deux (ou plus) si nécessaire ;
- malaxage d'homogénéisation ;
- granulation
- pressage, notamment dans une chambre de moulage, d'une quantité de poudre ou de granulés feedstock issue du malaxage et de la granulation, pour la réalisation d'une ébauche de composant. Ce pressage peut être réalisé par injection, sous pression, notamment dans un injecteur à vis comportant des moyens de mise en température de cette quantité de poudre ou de granulés feedstock issue du malaxage ;
- étuvage de déliantage pour la combustion ou/et la dissolution de certains composants du mélange servant de liant traitement thermique de l'ébauche de composant, ou frittage ;
- traitement thermique de l'ébauche en sortie de déliantage, pour le frittage donnant sa cohérence finale au composant fini. Ce traitement thermique entraîne un retrait dimensionnel, qui permet l'obtention d'un composant en cotes finies ;
- traitement de finition d'aspect du composant.

Cet exposé simplifié du procédé cache la complexité réelle de mise au point, qui est propre à chaque composition de mélange de matières premières, et à chaque type de composant fini selon ses caractéristiques physiques, notamment de résistance à l'usure et d'aspect, et selon ses caractéristiques mécaniques et chimiques.

La conduite de chaque étape est délicate, et exige le respect de paramètres précis, sous peine de changements irréversibles de caractéristiques du mélange, de l'ébauche injectée, de l'ébauche déliantée, ou du composant fritté.

Tout particulièrement, l'étape du malaxage d'homogénéisation est cruciale pour la suite du processus. Cette étape de malaxage peut dans certains cas être combinée avec l'étape préalable de mélange des matières premières, qui peut se faire directement dans le poste de fabrication qu'on appelle ici « malaxeur ».

En effet, lors du malaxage se produisent des réactions entre certaines matières premières, et ces réactions modifient immédiatement les conditions physiques dans lesquels se trouve le mélange en cours de malaxage. En particulier, des réactions exothermiques non maîtrisées ni compensées peuvent aboutir à une altération complète du mélange, qui est alors inutilisable pour la fabrication du composant final prévu. Les paramètres de température, de vitesse, et de couple, sont à surveiller étroitement. La répétitivité des caractéristiques physiques obtenues in fine est une condition obligatoire, qui impose une régulation parfaite du malaxage, l'anticipation et le contrôle des réactions qui s'y produisent.

En particulier, quand on malaxe un tel mélange avec des couteaux rotatifs dans un malaxeur, les éléments du mélange montent très vite en température, sous l'effet de la friction, jusqu'à dépasser leur température de fusion et à s'amalgamer sous forme pâteuse. Le problème réside dans le gradient de température extrêmement élevé dans le mélange quand il arrive au voisinage de cette ou ces températures de fusion, avec une valeur de l'ordre de plusieurs °C par seconde, notamment 10°C par seconde. Il est alors très difficile d'appliquer un refroidissement efficace pour prévenir l'emballement et la détérioration du mélange. Le document EP 2338590 A1 divulgue un malaxeur comportant une cuve dans laquelle est mobile un moyen de malaxage et comportant des moyens d'échange thermique.

### Résumé de l'invention

L'invention se propose d'améliorer le malaxage en métallurgie des poudres pour l'obtention de céramiques, de façon à obtenir une production de qualité très reproductible, avec un coefficient de retrait maîtrisé, avec une amplitude de dispersion relative inférieure à 2 pour mille, voire à 1 pour mille.

A cet effet, l'invention concerne un malaxeur pour la fabrication de granulés dits feedstock de type céramique comportant, d'une part au moins une poudre inorganique d'au moins un élément de type oxyde ou cermet ou métal ou nitrure ou d'au moins un composé comportant au moins un desdits éléments, et d'autre part au moins un liant organique, ledit malaxeur comportant au moins une cuve dans laquelle est mobile au moins un moyen de malaxage, et comportant des moyens d'échange thermique, caractérisé en ce que lesdits moyens d'échange thermique comportent des moyens de réchauffement agencés pour le chauffage de ladite cuve ou/et de son contenu à une température comprise entre une température inférieure à partir de laquelle un mélange correspondant à un type de céramique donné parvient à l'état pâteux, et une température supérieure en-dessous de laquelle doit rester ledit mélange correspondant audit type de céramique donné, ladite température inférieur et ladite température supérieure étant mémorisées, pour ledit mélange correspondant à un type de céramique donné, et encore caractérisé en ce que lesdits moyens de réchauffement échangent l'énergie, dans une première connexion, avec un premier circuit d'échange thermique de maintien en température de malaxage, externe à ladite cuve, et dont l'inertie thermique dudit premier circuit est supérieure à celle de ladite cuve à pleine charge dudit mélange, et en ce que lesdits moyens d'échange thermique comportent encore des moyens de refroidissement échangent l'énergie, dans une deuxième connexion, avec un deuxième circuit à température ambiante, externe à ladite cuve, et dont l'inertie thermique est très supérieure à celle de ladite cuve à pleine charge dudit mélange dans un deuxième facteur.

L'invention concerne encore un procédé de malaxage de matière première pour métallurgie des poudres, en particulier pour la fabrication de granulés feedstock d'un type de céramique donné à partir d'un mélange comportant au moins une poudre inorganique d'au moins un élément de type oxyde ou cermet ou métal ou nitrure ou d'au moins un composé comportant au moins un desdits éléments et au moins un liant, selon la revendication 14.

### Description sommaire des dessins

D'autres caractéristiques et avantages de l'invention apparaîtront à la lecture de la description détaillée qui va suivre, en référence aux dessins annexés, où :
- la figure 1 représente, de façon schématisée, un système de pilotage d'un malaxeur selon l'invention ;
- la figure 2 représente, de façon schématisée, partielle (les liaisons avec le système de pilotage n'étant qu'ébauchées) et en coupe passant par l'axe d'un arbre de malaxage, un malaxeur selon l'invention selon une première variante où la cuve du malaxeur comporte un unique circuit d'échange d'énergie avec un circuit de réchauffage unique ;
- la figure 3 représente, de façon similaire à la figure 2, une deuxième variante où la cuve du malaxeur comporte deux circuits d'échange d'énergie, l'un échangeant l'énergie avec le circuit de réchauffage de la figure 2, et l'autre échangeant l'énergie avec un circuit de refroidissement ;
- la figure 4 et la figure 5 représentent, de façon schématisée et en vue de côté, deux exemples d'arbres de malaxages assemblés selon des compositions différentes ;
- la figure 6 représente, de façon schématisée, partielle (les liaisons avec le système de pilotage n'étant pas représentées) et en vue de dessus, un malaxeur selon la première variante de la figure 2 ;
- la figure 7 représente, de façon analogue à la figure 6, un malaxeur selon la deuxième variante de la figure 3 ;
- la figure 8 représente, de façon schématisée, partielle (les liaisons avec le système de pilotage n'étant pas représentées) et en vue de dessus, un malaxeur selon l'invention, dont l'arbre de malaxage a été extrait, et remplacé par un ensemble de couteaux et volets mobiles de fractionnement et de concassage d'une galette, en combinaison avec une vis sans fin logée dans une gorge du fond de cuve ;
- la figure 9 représente, sous forme d'un schéma-blocs, une séquence de process de malaxage selon l'invention dans un malaxeur selon l'invention.

### Description détaillée des modes de réalisation préférés

La poudre dite de céramique plus particulièrement mise en oeuvre dans le cadre de l'invention est une poudre inorganique d'au moins un élément de type oxyde ou cermet ou métal ou nitrure ou d'au moins un composé comportant au moins un desdits éléments.

Par exemple, et de façon nullement limitative, cette poudre inorganique comporte du zircone ou de l'alumine, des carbures, des nitrures, ou similaire.

Ces éléments ou ces oxydes sont sélectionnés pour garantir une dureté élevée, une haute résistance à l'usure, une haute résistance aux efforts mécaniques, et une tenue dans le temps exceptionnelle, sans altération.

Les liants organiques utilisés, résines ou matières plastiques ou similaires, permettent d'amener cette poudre inorganique à l'opération de pressage ou/et d'injection, avec une viscosité suffisante pour son écoulement dans un moule, tout en ayant une résistance suffisante pour éviter les déformations.

Le malaxeur selon l'invention, permettant la mise en oeuvre du procédé de malaxage décrit plus loin, est polyvalent, et ces exemples de métallurgie des poudres ne sont pas limitatifs de ses utilisations possibles. Par exemple la mise en oeuvre de « MIM » (metal injection molding) est également possible.

Le malaxage a pour but d'enrober les grains de poudre par le ou les liants, de façon à obtenir une pâte homogène.

Cette pâte homogène devient une masse compacte après refroidissement en sortie du malaxage. Cette masse compacte est ensuite fractionnée par concassage pour l'obtention de granulés appelés feedstock, de composition homogène et de dimensions calibrées, et qui sont prêts à être utilisés en l'état en alimentation d'une presse d'injection par exemple.

Dans une mise en oeuvre particulière, et non limitative, de l'invention, on utilise un malaxeur 1 pour la fabrication de granulés feedstock de type céramique comportant, d'une part au moins une telle poudre inorganique, et d'autre part au moins un liant organique, ce malaxeur 1 comporte au moins une cuve 2. Dans ce malaxeur 1 est mobile au moins un moyen de malaxage 3, plongeant dans une cuve 2 correspondante ou saillant du fond d'une telle cuve 2 tel que représenté sur les figures.

Le malaxeur 1 comporte des moyens d'échange thermique 4, qui peuvent comporter au moins un circuit dans lequel un fluide circule dans une double paroi d'une cuve 2, ou circule dans des serpentins immergés dans une cuve 2, ou autre.

Le malaxeur 1 comporte avantageusement des moyens de pilotage 5 connectés à des moyens de mesure 6 et à des moyens de mémorisation 7 de paramètres de température en fonction du type de matériau à réaliser.

Ces moyens de pilotage 5 sont agencés pour la régulation de température de la cuve 2 et l'échange de chaleur entre la cuve 2 et au moins un milieu externe à la cuve 2, par les moyens d'échange thermique 4.

Dans la version la plus simple, les moyens de pilotage 5 sont à commande manuelle, et comportent des moyens de commande des vitesses de rotation de chaque moyen de malaxage 3, et des températures ou/et débits de chaque circuit d'échange thermique, au vu d'informations affichées par des moyens de mesure 6 tels que sondes de température situées dans la cuve 2, dans chaque circuit d'échange thermique, ou thermomètres plongés dans la pâte, de façon manuelle ou automatisée.

Dans une fabrication plus automatisée, les moyens de pilotage 5 comportent au moins un automate programmable capable d'effectuer ces actions en fonction de programmes de production mémorisés pour chaque type de matériau inorganique dit « céramique » à produire.

Ces moyens de pilotage 5 peuvent, selon le degré d'automatisation de l'installation, contrôler notamment ces moyens d'échange thermique 4, en corrélation avec des valeurs de vitesse d'arbre ou/et de circulation de la masse compacte mesurées, de températures de masse compacte ou/et de cuve mesurées, et avec des valeurs-seuil, en particulier de température, imposées pour la fabrication d'un produit donné. L'ensemble des paramètres relatif à un produit donné, stocké dans les moyens de mémorisation 7, permet avantageusement de piloter l'ensemble de son cycle de fabrication, incluant toutes les temporisations souhaitées.

Selon l'invention, les moyens d'échange thermique 4 comportent des moyens de réchauffement 41 agencés pour le chauffage de la cuve 2 ou/et de son contenu à une température comprise entre une température inférieure TINF à partir de laquelle un mélange correspondant à un type de céramique donné parvient à l'état pâteux, et à une température supérieure TSUP en-dessous de laquelle doit rester le mélange correspondant au type de céramique donné, pour éviter la dégradation des liants.

Cette température inférieure TINF et cette température supérieure TSUP sont mémorisées, pour le mélange correspondant à un type de céramique donné, au niveau des moyens de mémorisation 7. Dans la version manuelle de conduite du malaxeur, les moyens de mémorisation consistent en des fiches récapitulatives de la recette de composition de la charge du malaxeur, avec ses tolérances, comportant les températures limites de chaque phase, et une fourchette de durée de chaque phase.

Ces moyens de réchauffement 41 échangent l'énergie, dans une première connexion, avec un premier circuit 8 d'échange thermique de maintien en température de malaxage, externe à la cuve 2. Et l'inertie thermique du premier circuit 8 est supérieure à celle de la cuve 2 à pleine charge du mélange. De préférence elle lui est supérieure dans un facteur K1 supérieur à 2.

Le fait de chauffer la cuve 2 et son contenu va à l'encontre des préjugés de l'art antérieur. Le chauffage permet d'avoir moins d'écart par rapport à une température moyenne, et de maîtriser complètement le gradient de température. Il n'est plus nécessaire de faire tourner l'arbre de malaxage à grande vitesse pour atteindre les températures de fusion des composants par friction de ceux-ci. La production obtenue est plus homogène, ce qui est capital en métallurgie des poudres, car il s'agit de maîtriser parfaitement le coefficient de retrait lors du frittage, et ce coefficient dépend de la qualité du malaxage. Par exemple pour une fabrication de céramique à base de matières premières minérales telles que de la poudre d'oxyde de zirconium ZrO₂, l'art antérieur permettait d'obtenir pour une production en 5 batchs journaliers de 20 kg chacun, un coefficient de retrait dans la fourchette 1,2850 à 1,2920, tandis que la mise en oeuvre du malaxeur selon l'invention et du procédé de malaxage associé permet, toutes choses égales par ailleurs, de ramener ce coefficient dans la fourchette 1,2875 à 1,2895, voire respectivement dans la fourchette 1,2880 à 1,2890, ce qui est excellent, puisque l'amplitude de la dispersion relative est alors de 1,6 pour mille, respectivement 0,8 pour mille contre 5,4 pour mille dans l'art antérieur, soit une division par un facteur d'environ 3,5, respectivement 7. La production est ainsi très reproductible.

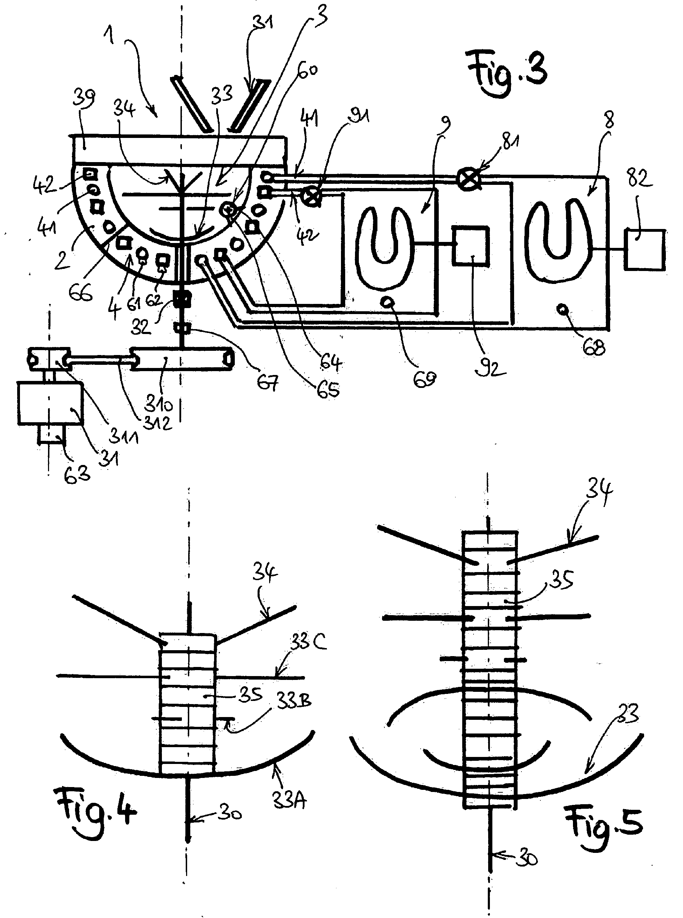

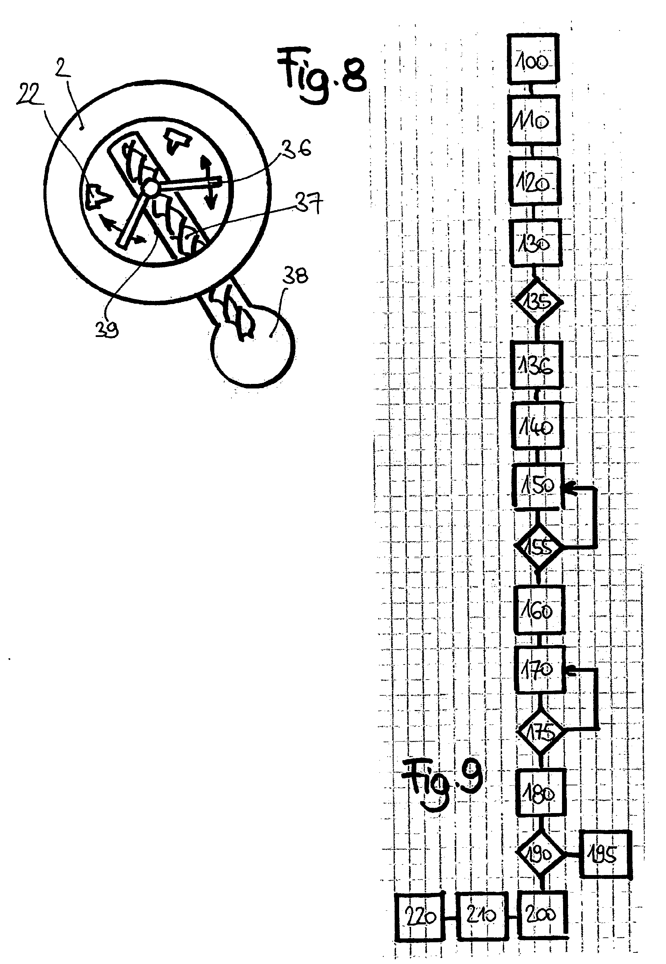

Dans une mise en oeuvre particulière de l'invention, illustré par les figures 3 et 8, les moyens d'échange thermique 4 comportent des moyens de refroidissement 42 pour le refroidissement de la cuve 2 ou/et de son contenu. Les moyens de refroidissement 42 sont alors distincts des moyens de réchauffement 41, tel que visible sur les figures 3 et 8. Dans cette variante, les moyens de refroidissement 42 échangent l'énergie, dans une deuxième connexion, avec un deuxième circuit 9 à température ambiante, externe à la cuve 2, et dont l'inertie thermique est très supérieure à celle de la cuve 2 à pleine charge du mélange, et de préférence supérieure dans un deuxième facteur K2 supérieur à 2.

Dans une mise en oeuvre particulière de l'invention, les moyens de pilotage 5 pilotent les moyens d'échange thermique 4 de façon à activer l'échange thermique avec la cuve 2, à un instant donné, des seuls moyens de refroidissement 42 ou des seuls moyens de réchauffement 41.

L'utilisation d'un circuit unique d'échange thermique au niveau de la cuve, alternativement mis en situation d'échange thermique avec une source chaude ou avec une source froide, permet d'atteindre la courbe de température souhaitée. La deuxième variante avec deux circuits distincts, sur l'un lesquels on peut raccorder la cuve de façon instantanée, permet de surmonter les effets de l'inertie thermique propre à la cuve 2, par sa mise en communication instantanée avec un circuit d'inertie thermique très supérieure à la sienne, permettant de la stabiliser très rapidement dans une fourchette de températures compatible avec la bonne conduite du process, et ainsi de réduire sensiblement le temps de cycle global.

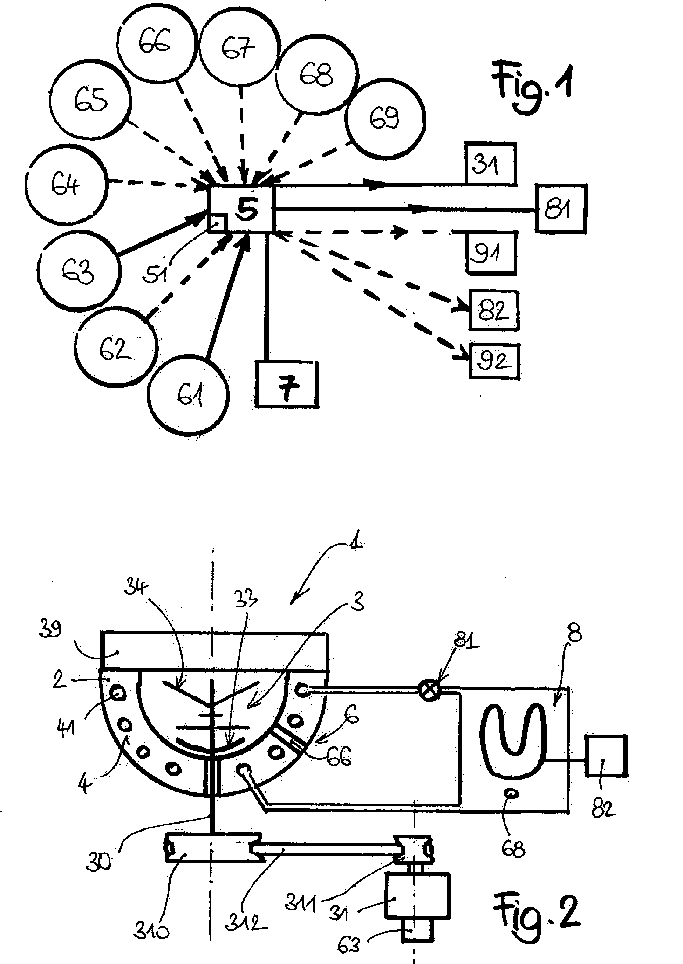

Le moyen de malaxage 3 comporte de préférence, et non limitativement, un arbre 30 en rotation porteur de pales 33 ou/et de couteaux dans la cuve 2. Chaque arbre de malaxage 30 est de préférence entraîné, via une courroie ou similaire, par un moteur 31 équipé d'un variateur continu relié à des moyens de pilotage 5 qui commandent ce variateur. L'arbre 30 est de préférence équipé d'une dynamo tachymétrique 63 qui communique la vitesse réelle de rotation de l'arbre 30 aux moyens de pilotage 5. La figure 2 montre un arbre de malaxage 30 en porte-à-faux et entraîné sous le fond de la cuve 2, qu'il traverse, cet arbre 30 est équipé d'une poulie 310 de diamètre supérieur à celui de la poulie moteur 311, jointes par une courroie 312 ou similaire, de façon à obtenir plus de couple, dans la mesure où l'on a moins besoin d'atteindre des vitesses de rotation élevées que dans l'art antérieur.

Les figures 1 à 3 illustrent l'action des moyens de pilotage 5, sur la base d'au moins une information de vitesse du moyen de malaxage 3 ou d'une masse de produit en cours de transformation par le malaxeur 1, et d'au moins une information de température de la cuve 2 ou de cette masse de produit, relevées par des capteurs que comportent les moyens de mesure 6, pour commander la vitesse du moteur 31 entraînant directement ou indirectement l'arbre de malaxage 30, et un débit d'échange thermique, notamment par une première pompe 81 sur le premier circuit 8 des moyens de réchauffement 41.

Quand, de façon particulière dans la deuxième variante, les moyens de refroidissement 42 échangent l'énergie, dans une deuxième connexion, avec un deuxième circuit 9, les moyens de pilotage 5 agissent aussi sur une deuxième pompe 91 sur le deuxième circuit 9 des moyens de refroidissement 42.

Les moyens de pilotage 5 comportent une horloge 51, permettant de respecter les paramètres du process introduits dans les moyens de mémorisation 7.

Les moyens de mesure 6 peuvent, en particulier et non limitativement, comprendre tout ou partie des capteurs suivants :
- un capteur de température 61 dans le premier circuit 8 des moyens de réchauffement 41, de préférence dans la cuve 2 ou le plus près possible de la cuve. Dans le cas de la première variante qui ne comporte que des moyens de réchauffement 41, un capteur est de préférence disposé en sortie de ce système de réchauffage ; un autre capteur est disposé en entrée du même circuit ;
- dans le cas de la deuxième variante, un capteur de température 62 dans le deuxième circuit 9 des moyens de refroidissement 42, de préférence dans la cuve 2 ou le plus près possible de la cuve ;
- une dynamo tachymétrique 63 pour la mesure de la vitesse de rotation de l'arbre de malaxage 30 ;
- un capteur de mouvement 64 caractérisant le mouvement de pâte dans la cuve, notamment un capteur de vitesse de rotation d'une vis sans fin ou d'une roue dentée montée libre sur un axe en fond de cuve, ou similaire ;
- un capteur de température 65 au coeur du mélange ou de la pâte, notamment couplé avec le capteur de mouvement 64 précédent ;
- au moins un (de préférence deux) capteur de température 66 sur une surface intérieure de la cuve 2, de préférence à fleur de la surface intérieure de la cuve 2, de préférence au voisinage du fond de cuve ;
- un capteur de température 67 de l'arbre de malaxage 30, de préférence vers l'extrémité de celui-ci au voisinage du fond de la cuve 2 ;
- un capteur de température 68 dans un gros réservoir du premier circuit 8 d'échange ;
- un capteur de température 69 dans un gros réservoir du deuxième circuit 9 d'échange.

Les moyens de pilotage 5 peuvent, encore, agir sur un premier régulateur 82 effectuant un apport (ou un enlèvement) de chaleur au premier circuit 8, ou/et agir sur un deuxième régulateur 92 effectuant un enlèvement (ou un apport) de chaleur au deuxième circuit 8, ces premier 82 et deuxième 92 régulateurs pouvant comporter une résistance ou/et un groupe froid. De préférence, le premier circuit 8 véhicule de l'huile, tandis que le deuxième circuit 9 véhicule de l'eau glycolée, ou similaire.

Dans une variante particulière, le malaxeur 1 comporte une pluralité de cuves 2 ainsi équipées, communiquant entre elles depuis une cuve d'amont où sont déversées les matières premières par une alimentation 21 telle qu'une trémie ou similaire, jusqu'à une cuve d'aval servant notamment au concassage final de la masse compacte malaxée. Cette cuve d'aval peut avoir une double fonction de cuve de malaxage et de cuve de concassage : les matières premières en mélange y sont déversées par la cuve d'amont, au moins un arbre de malaxage effectue le malaxage proprement dit avec des pales ou/et couteaux de forme adaptée au retournement d'une masse pâteuse dans la cuve de malaxage et à sa séparation par tranchage, le concassage final pouvant être effectué, selon le cas, par un tel arbre de malaxage 30, ou par au moins un arbre de concassage muni de couteaux 22 plus précisément adaptés à la fragmentation d'une masse compacte solidifiée. Si nécessaire un concasseur d'appoint peut être utilisé en aval pour atteindre la granulométrie souhaitée.

Les figures illustrent le cas non limitatif d'une cuve 2 unique, dans laquelle est conduit tout le processus de malaxage, depuis l'introduction des matières premières, jusqu'au concassage de la masse malaxée refroidie appelée galette, pour l'obtention de granulés feedstock ou bien d'une fine farine.

Plus particulièrement, tel que représenté sur la figure 2, l'arbre 30 est vertical, et comporte notamment des pales 33, de préférence réparties selon plusieurs plans parallèles.

L'étagement des pales ou/et couteaux est de préférence réglable, de façon à être efficace aussi bien pour des petites charges que pour des grosses : ou bien l'arbre de malaxage 30 entier est interchangeable, au niveau d'un accouplement 32, ou bien il comporte une succession de douilles porteuses de pales ou couteaux, en appui les unes sur les autres et enfilées sur un arbre commun, et séparées si nécessaire par des entretoises 35 pour obtenir une configuration particulière, tel que visible sur les figures 3 et 4, où l'arbre 30 est ainsi équipé de trois ensembles de pales inférieures 33A, 33B, 33C, surmontées de pales supérieures 34. Si la disposition par niveaux sensiblement plans des pales ou couteaux est la plus courante, on peut aussi utiliser, surtout pour le niveau supérieur adapté aux grosses charges, des pales 34 ou couteaux inscrits dans une enveloppe sensiblement conique par rapport à l'axe de l'arbre. Par pales on entend des ailettes sensiblement radiales ayant une forme permettant de donner un mouvement particulier, au mélange de matières premières d'abord, et à la pâte ensuite. Par couteaux on entend des ailettes de forme similaire et de section plus fine, et comportant un bord d'attaque affûté, notamment pour trancher la masse pâteuse tout en l'entraînant en mouvement ; toutefois un bord affûté peut se révéler contre-productif, car plus sensible à l'usure qu'une pale d'entraînement de la pâte, cette usure générant une pollution altérant la précision de la composition des feedstock obtenus, de ce fait l'affûtage éventuel nécessite une surveillance plus poussée de la production. Avantageusement, les pales ou couteaux dits inférieurs, les plus proches du fond de cuve adoptent une forme voisine de celui-ci, ou bien s'inscrivent dans une surface conique, torique, ou sphérique, et exercent une fonction de raclage de la pâte dans le fond de cuve.

Les pales et couteaux sont de préférence décalés angulairement d'un étage à l'autre, les différents étages pouvant comporter des nombres de pales ou couteaux différents avec une disposition angulaire variable, en particulier pour prévenir tout phénomène de résonance et de bruit.
Dans le cas de pales simples à deux bras, deux étages adjacents sont décalés angulairement d'environ 90°.

De façon connue, les pales 33 ou/et couteaux ont de préférence une légère incidence par rapport au plan perpendiculaire à l'axe de l'arbre 30. Cette incidence peut être réglée, soit très simplement par échange d'un étage de coupe monté sur une douille telle que présentée ci-dessus, soit dans de plus grosses installations avec un mécanisme de renvoi qui toutefois est plus sensible à l'usure générée par le mouvement de la pâte. Selon le cas, l'incidence peut être ajustée, en fonction du sens de rotation de l'arbre, soit pour pousser la masse compacte au fond de la cuve, soit au contraire pour tendre à la décoller : une réalisation mixte consomme certes plus de puissance, mais un étage supérieur tendant à décoller la pâte du fond de cuve facilite son amalgame, tandis qu'un étage de coupe inférieur tendant à rabattre la pâte vers le fond de cuve est avantageux en particulier dans les étapes finales du process et dans le fractionnement de la galette obtenue après refroidissement de la masse compacte pâteuse.

Le concassage de la galette peut également être effectué, après un dégagement vertical de l'arbre de malaxage 30, par l'action conjuguée d'une vis sans fin 37 noyée dans une gorge 39 en fond de cuve 2, et de volets 36 articulés sur un axe vertical, l'extraction des granulés feedstock concassés se faisant par inversion de sens de la vis sans fin et le convoyage vers une station de desserte 38.

Dans une autre variante, le concassage est mené jusqu'à l'obtention d'une farine. Cette farine est transformée en aval, dans une station annexe de granulation où elle est d'abord comprimée pour former un boudin extrudé, découpé en pellets au fur et à mesure de son avance.

Chaque cuve 2 est de préférence dotée d'un moyen de fermeture comportant au moins une soupape ou un orifice d'évacuation de surpression.

L'échange de température, au niveau de la cuve dans laquelle est effectué le malaxage, permet :
- par une élévation de température, un ramollissement de certains liants, sous une température seuil maximale de ramollissement la plus élevée ;
- une très bonne homogénéisation de la pâte, avec une dispersion de température au coeur de la pâte de l'ordre de +/- 2 à 3°C ;
- par le maintien à une température maintenue constante d'un premier circuit 8 d'échange thermique de maintien en température de malaxage, dont l'inertie thermique est très supérieure à celle de la cuve à pleine charge, de maîtriser le gradient thermique de la masse compacte dans la cuve à une valeur inférieure à 3°C par minute lors de la friction des composants du mélange, à comparer avec un gradient de l'ordre de 10°C par seconde dans des malaxeurs de l'art antérieur seulement munis de moyens de refroidissement, cette faible valeur de gradient obtenue par la mise en oeuvre de l'invention autorisant un malaxage à vitesse moindre ;
- par une diminution de température, le maintien de la température de la pâte sous un seuil limite maximal propre au mélange défini pour prévenir toute altération de ses propriétés, et en particulier lorsque des réactions exothermiques se produisent entre certains constituants du liant, ou/et lorsque la vitesse de malaxage est trop importante, ou/et lorsque les frottements dans le mélange ou avec les pales/couteaux ou avec la cuve sont trop importants ;
- par une diminution rapide de température consécutive au débrayage du circuit d'échange thermique de maintien en température de malaxage, le refroidissement de la masse compacte préalablement malaxée pour sa solidification ; cette diminution rapide de température peut être obtenue par la connexion du moyen d'échange thermique 4 à un deuxième circuit 9 à température ambiante, dont l'inertie thermique est très supérieure à celle de la cuve à pleine charge.

La régulation de vitesse de rotation d'au moins un arbre de malaxage permet :
- par une diminution de vitesse, l'abaissement des frottements décrits ci-dessus ;
- par une diminution de vitesse en phase finale, une prise progressive de la masse compacte jusqu'à sa solidification sous forme d'une galette ;
- par une augmentation de vitesse, l'amélioration de l'agglomération des composants du liant autour des grains de poudre inorganique d'au moins un élément de type oxyde ou cermet ou métal ou nitrure ou d'au moins un composé comportant au moins un desdits éléments ;
- par une augmentation de vitesse, la fragmentation sous forme de granulés feedstock de la masse compacte préalablement solidifiée sous forme de galette.

La conduite, en fonction du temps, des moyens d'échange de température et de la vitesse de malaxage conditionne donc la qualité du produit final, en même temps que les paramètres propres au produit intermédiaire, notamment sa viscosité. La bonne gestion de cette conduite conditionne naturellement le temps de cycle dans le malaxeur, et donc le coût de production et l'amortissement de l'installation.

De façon générale, on s'efforce de maintenir à la fois la température et la vitesse de malaxage sous des valeurs seuil propres à chaque mélange.

Le malaxeur 1 peut, encore, être équipé de moyens de mesure de la vitesse de circulation de la masse compacte dans la cuve, par exemple au niveau d'un mobile 60 tel qu'une vis sans fin ou une roue folle immergée dans la masse à l'intérieur de la cuve, dont on mesure la vitesse de rotation par un capteur de mouvement de pâte 64, et, avantageusement, la température à coeur de la masse compacte pâteuse par un capteur de température de pâte 65.

Des moyens de mesure de température de la masse compacte peuvent être situés, ou au niveau d'un tel mobile 60, ou/et en fond de cuve 2 par un capteur de température 66 sur une surface intérieure de la cuve 2, ou/et en périphérie de l'arbre de malaxage 30, par un capteur de température 67 de préférence à sa partie inférieure au voisinage du fond de la cuve 2.

Le procédé de malaxage de matière première pour métallurgie des poudres, selon l'invention, en particulier pour la fabrication de granulés feedstock d'un type de céramique donné à partir d'un mélange comportant, d'une part au moins une poudre inorganique d'au moins un élément de type oxyde ou cermet ou métal ou nitrure ou d'au moins un composé comportant au moins un desdits éléments, et d'autre part au moins un liant organique, se déroule en comportant au moins les étapes suivantes :
- on introduit le mélange dans la cuve 2 d'un malaxeur 1 comportant au moins un moyen de malaxage 3 ;
- on stabilise en température, par connexion de moyens d'échange thermique 4 à un premier circuit 8 d'échange thermique de maintien en température de malaxage, la cuve 2 et son contenu au voisinage d'une température de malaxage comprise entre une température inférieure TINF propre au mélange considéré et à partir de laquelle le mélange parvient à l'état pâteux, et à une température supérieure TSUP propre au mélange considéré et en-dessous de laquelle doit rester le mélange, de façon à éviter la dégradation des liants ;
- on met en mouvement à vitesse inférieure ou égale à 700 tours par minute le moyen de malaxage 3 ;
- on effectue le malaxage du mélange jusqu'à l'obtention d'une masse compacte homogène ;
- on arrête la stabilisation à température élevée, supérieure ou égale à une température T5 propre au mélange considéré et caractéristique d'une masse compacte homogène, de la cuve 2 et de son contenu, dont on autorise la descente en température.

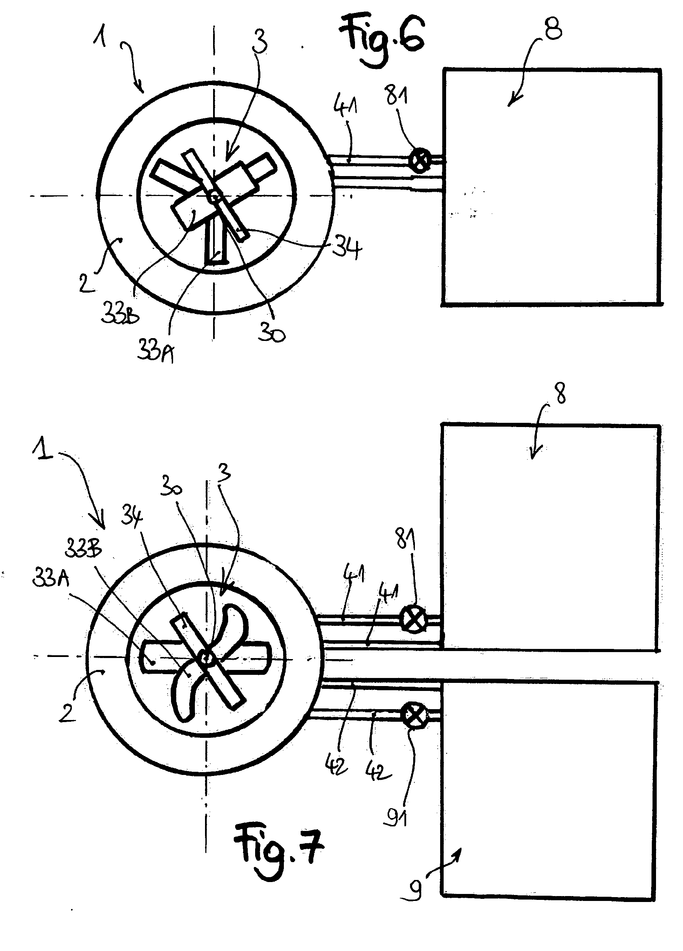

Dans la variante des figures 2 et 6, les moyens d'échange thermique 4 comportent un unique circuit de réchauffage, qui comporte des moyens de réchauffement 41 et qui est relié à un premier circuit 8 d'échange thermique de maintien en température de malaxage. Les moyens de réchauffement 41 comportent par exemple au moins un thermo-régulateur de type « HB Therm » ou similaire, à huile, contrôlé en température, sous une pression maximale de 5 bars, qui permet une conduite en température avec un gradient positif, ou avec un gradient négatif. La descente en température de la cuve 2 et de son contenu peut alors être pilotée par ce thermo-régulateur.

Dans une mise en oeuvre particulière de l'invention, quand on arrête la stabilisation à température élevée, supérieure ou égale à une température propre au mélange considéré et caractéristique d'une masse compacte homogène, de la cuve 2 et de son contenu, on effectue la descente en température de la cuve 2 et de son contenu, soit de façon naturelle, soit par conduite des moyens d'échange thermique à un deuxième circuit à température ambiante voisine de 20°C.

En particulier, quand le malaxeur 1 est équipé d'une deuxième circuit de refroidissement 9, on peut connecter, pour effectuer la descente en température, les moyens d'échange thermique 4 à ce deuxième circuit 9 qui est à une température ambiante voisine de 20 °C.

La cuve 2 est de préférence équipée d'un couvercle 39 étanche pour interdire toute pollution du mélange, et garantir les respect des proportions des différents composants du mélange.

Dans une mise en oeuvre particulière de l'invention, pendant ou après ladite descente en température, on concasse la masse compacte, ou bien dans la cuve 2 à une température inférieure à 100°C et à vitesse supérieure ou égale à 700 tours par minute du moyen de malaxage 3, ou bien dans une station de concassage annexe au malaxeur 1.

Pour la mise en oeuvre de cette dernière alternative comportant une rotation à vitesse élevée, la cuve 2 est avantageusement revêtue intérieurement d'un revêtement anti-usure, de type diamant, ou vitrification, ou similaire.

Une séquence particulière d'utilisation du malaxeur 1 est présentée ci-après, pour un exemple de lots de production d'une masse de 5 kg environ (soit un volume d'environ 10 litres) de céramique à base d'oxyde de zirconium, avec les étapes suivantes, qui précisent notamment ce qu'on entend par vitesse lente, vitesse élevée, température élevée :
- 100 : chargement, soit directement dans la cuve 2, soit au niveau d'une alimentation 21, d'une première partie d'une charge de poudre et de structurants, notamment comportant de la poudre et des plastiques polymères, lancement du régulateur de température de cuve à la température maximale de T0=180°C par activation des moyens de réchauffement 41 et désactivation des moyens de refroidissement 42, démarrage de rotation de l'arbre de malaxage 30 à V0=300 tours par minute ;
- 110 : après l'atteinte d'une température de T1=145°C et d'une vitesse de rotation de V1=300 tours par minute, chargement d'une deuxième partie constituant le reste de la charge de liants, notamment comportant des bases de cire ;
- 120 : après l'atteinte d'une température de T2=160°C, arrêt de la rotation de l'arbre 30, ouverture de la cuve 2, inspection, raclage des parois et pales/couteaux si nécessaire (cette phase d'inspection peut être assistée par une caméra, toutefois la protection contre la pollution est difficile, le meilleur contrôle d'encrassement de la cuve 2 et des pales 33 et 34 peut être effectué par mesure du couple ou de la puissance absorbée au niveau du moteur 31, en référence à des valeurs de consigne d'une production de référence mémorisée dans les moyens de mémorisation 7) ;
- 130 : remise en rotation, après l'atteinte d'une température de T3=168°C et d'une vitesse de rotation de V3=700 tours par minute, arrêt de la rotation de l'arbre 30, ouverture de la cuve, inspection étape 135, raclage des parois et pales/couteaux selon une étape 136 si nécessaire ;
- 140 : remise en rotation, après l'atteinte d'une température de TINF=T4=170°C et d'une vitesse de rotation de V4=700 tours par minute, malaxage pendant une durée D4 pré-définie ;
- 150 : mesure de la température de la masse compacte, qui doit être comprise entre T5=180°C et TSUP=T6=190°C (test étape 155), poursuite du malaxage jusqu'à l'atteinte de cette fourchette de températures ;
- 160 : arrêt de la rotation de l'arbre 30, refroidissement par désactivation des moyens de réchauffement 41 et activation des moyens de refroidissement 42 ;
- 170 : après l'atteinte d'une température comprise entre T7=150°C et T8=180°C (test étape 175), mise en rotation de la masse compacte pour débloquer les pales/couteaux et/ou améliorer le cisaillement ;
- 180 : rotations ponctuelles à V9=300 tours par minute pour constituer une galette, et refroidissement à une température comprise entre T9=95°C et T10=110°C. Ce refroidissement est effectué, ou bien par passage en mode refroidissement du système de régulation de température dans la première variante, avec un gradient négatif de l'ordre de -2°C par minute, ou bien dans la deuxième variante par désactivation des moyens de réchauffement 41 et activation des moyens de refroidissement 42.
- 190 : vérification de l'absence de pollution, et arrêt de toute rotation en cas de pollution et alors étape 195 : finition manuelle de la découpe de la galette.

Les étapes qui suivent dépendent de l'équipement du malaxeur 1 en moyens de découpe de galette, de concassage, et en moyens de protection de la cuve 2 contre l'abrasion.

En l'absence de moyens particuliers, on extrait manuellement des blocs découpés dans la galette, et on effectue le concassage dans un moyen annexe.

Avec une cuve 2 équipée d'un revêtement interne contre l'abrasion, on peut effectuer les étapes suivantes directement dans la cuve du malaxeur.
- 200 : concassage à V11=700 tours par minute ;
- 210 : arrêt de la rotation de l'arbre 30 ;
- 220 : évacuation à moins de V12=2000 tours par minute et à moins de T12=85°C. la vitesse supérieure à 100 tours par minute conduit en général à un farinage du produit, lequel est alors facile à retravailler pour son conditionnement en pellets ou similaire.

Dans cet exemple d'une charge de 5 kg, le temps de cycle moteur total est compris entre 20 et 30 minutes, le temps total de refroidissement est compris entre 15 et 30 minutes, le temps total d'évacuation est compris entre 5 et 15 minutes.

Une telle séquence convient en particulier pour un mélange de matières premières comportant 14% en masse d'un liant qui comporte lui-même 50% en volume d'un matériau constitutif d'une matrice structurante, 42% d'un matériau constitutif d'une matrice fluidisante, et 8% d'un matériau constitutif d'une matrice surfactante.

Cette gamme de travail, utilisée avec un malaxeur 1 tel que défini plus haut, permet de prévenir de nombreux aléas de l'art antérieur :
- tous les gradients de température sont maîtrisés et précis ;
- la montée en température du mélange et de la masse compacte est strictement limitée à un seuil maximal prédéfini, ici égal à TSUP=T6=190°C ;
- la durée de refroidissement est réduite grâce au moyen d'échange de chaleur qui permet un refroidissement de la masse compacte;
- la température de la masse compacte peut être maintenue à une valeur donnée lorsque la rotation de l'arbre est stoppée, grâce au moyen d'échange de chaleur qui permet un réchauffement ou un refroidissement de la masse compacte, par l'intermédiaire de la cuve ;
- la température de la masse compacte est correctement approximée par la température de la cuve, elle est encore mieux déterminée avec un capteur immergé, soit en contrôle manuel, soit avec une sonde manipulée par un bras robotisé ;
- la poudre du mélange ne se colle plus sur les parois de la cuve lors de la montée en température, grâce à la maîtrise de la vitesse de rotation des pales lors du prémix à froid des constituants, à vitesse basse ;
- la régulation permet de limiter l'usure de la paroi de la cuve et celle des pales/couteaux, et de ce fait la pollution est très fortement réduite, et le matériel s'use beaucoup moins vite;
- la conduite du process peut être effectuée avec la cuve fermée ; une surveillance optique, notamment par caméra, peut permettre de déterminer un éventuel besoin de raclage des parois de la cuve, qui théoriquement est moins encrassée que dans l'art antérieur grâce à une montée progressive en température, et une maîtrise de la vitesse de rotation de la pâte ;
- l'homogénéisation du mélange de la masse compacte est satisfaisante, et de ce fait les granulés feedstock ont un comportement identique et répétitif au niveau du pressage par injection ;
- les consommations d'énergie d'entraînement, de chauffage, et de refroidissement, sont réduites.

## Revendications

1. Malaxeur (1) pour la fabrication de granulés dits feedstock de type céramique comportant, d'une part au moins une poudre inorganique d'au moins un élément de type oxyde ou cermet ou métal ou nitrure ou d'au moins un composé comportant au moins un desdits éléments, et d'autre part au moins un liant organique, ledit malaxeur (1) comportant au moins une cuve (2) dans laquelle est mobile au moins un moyen de malaxage (3), et comportant des moyens d'échange thermique (4), **caractérisé en ce que** ledit malaxeur comporte des moyens de mémorisation (7) pour le stockage de paramètres de température comportant une température inférieure (TINF) et une température supérieure (TSUP) en fonction d'un mélange correspondant à un type de céramique donné à réaliser, ladite température inférieure (TINF) à partir de laquelle ledit mélange parvient à l'état pâteux, et ladite température supérieure (TSUP) en-dessous de laquelle doit rester ledit mélange, et **en ce que** lesdits moyens d'échange thermique (4) comportent des moyens de réchauffement (41) agencés pour le chauffage de ladite cuve (2) ou/et de son contenu à une température comprise entre ladite température inférieure (TINF) et ladite température supérieure (TSUP), et encore **caractérisé en ce que** lesdits moyens de réchauffement (41) échangent l'énergie, dans une première connexion, avec un premier circuit (8) d'échange thermique de maintien en température de malaxage, externe à ladite cuve (2), et dont l'inertie thermique dudit premier circuit (8) est supérieure à celle de ladite cuve (2) à pleine charge dudit mélange, et **caractérisé en ce que** lesdits moyens d'échange thermique (4) comportent des moyens de refroidissement (42) qui sont agencés pour échanger l'énergie, dans une deuxième connexion, avec un deuxième circuit (9) à température ambiante, externe à ladite cuve (2), et dont l'inertie thermique est très supérieure à celle de ladite cuve (2) à pleine charge dudit mélange.

2. Malaxeur (1) selon la revendication 1, **caractérisé en ce que** ledit malaxeur (1) comporte des moyens de pilotage (5) qui sont connectés à des moyens de mesure (6) et auxdits moyens de mémorisation (7) desdits paramètres de température en fonction du type de matériau à réaliser, et qui pilotent lesdits moyens d'échange thermique (4).

3. Malaxeur (1) selon la revendication 1 ou 2, **caractérisé en ce que** dont l'inertie thermique dudit premier circuit (8) est supérieure à celle de ladite cuve (2) à pleine charge dudit mélange dans un facteur (K1) supérieur à 2.

4. Malaxeur (1) selon l'une des revendications 1 à 3, **caractérisé en ce que** l'inertie thermique dudit deuxième circuit (9) est très supérieure à celle de ladite cuve (2) à pleine charge dudit mélange dans un facteur (K2) supérieur à 2.

5. Malaxeur (1) selon la revendication 2, **caractérisé en ce que** lesdits moyens de pilotage (5) pilotent lesdits moyens d'échange thermique (4) de façon à activer l'échange thermique avec ladite cuve (2), à un instant donné, des seuls moyens de refroidissement (42) ou des seuls dits moyens de réchauffement (41).

6. Malaxeur (1) selon la revendication 2, **caractérisé en ce que** lesdits moyens de pilotage (5), sur la base d'au moins une information de vitesse dudit moyen de malaxage (3) ou d'une masse de produit en cours de transformation par ledit malaxeur (1), et d'au moins une information de température de ladite cuve (2) ou de ladite masse de produit, relevées par des capteurs que comportent lesdits moyens de mesure (6), pour commander, d'une part la vitesse d'un moteur (31) entraînant directement ou indirectement un arbre de malaxage (30) que comporte ledit moyen de malaxage (3), et d'autre part un débit d'échange thermique par une première pompe (81) sur ledit premier circuit (8) desdits moyens de réchauffement (41).

7. Malaxeur (1) selon la revendication 2, **caractérisé en ce que** quand lesdits moyens de refroidissement (42) échangent l'énergie, dans une deuxième connexion, avec un deuxième circuit (9), lesdits moyens de pilotage (5) commandent un débit d'échange thermique par une deuxième pompe (91) sur ledit deuxième circuit (9) desdits moyens de refroidissement (42).

8. Malaxeur (1) selon la revendication 2, **caractérisé en ce que** lesdits moyens de pilotage (5) sont agencés pour commander un premier régulateur (82) effectuant un apport ou un enlèvement de chaleur audit premier circuit (8), ou/et un deuxième régulateur (92) effectuant un enlèvement ou un apport de chaleur audit deuxième circuit (9).

9. Malaxeur (1) selon l'une des revendications 1 à 8, **caractérisé en ce que** ledit premier circuit (8) véhicule de l'huile, et **en ce que** ledit deuxième circuit (9) véhicule de l'eau glycolée.

10. Malaxeur (1) selon la revendication 2, **caractérisé en ce que** lesdits moyens de mesure (6) comportent un capteur de température (61) dans ledit premier circuit (8) desdits moyens de réchauffement (41), dans ladite cuve (2) ou en sa proximité immédiate, un capteur de température (62) dans ledit deuxième circuit (9) desdits moyens de refroidissement (42), dans ladite cuve (2) ou en sa proximité immédiate, et une dynamo tachymétrique (63) pour la mesure de la vitesse de rotation d'un arbre de malaxage (30) que comporte ledit moyen de malaxage (3).

11. Malaxeur (1) selon la revendication 2, **caractérisé en ce que** lesdits moyens de mesure (6) comportent un capteur de mouvement (64) caractérisant le mouvement de pâte dans ladite cuve (2), sous forme un capteur de vitesse de rotation d'un mobile (60) monté libre en fond de cuve, et un capteur de température (65) au coeur du mélange ou de la pâte, couplé avec ledit capteur de mouvement (64).

12. Malaxeur (1) selon la revendication 2, **caractérisé en ce que** lesdits moyens de mesure (6) comportent un capteur de température (67) d'un arbre de malaxage (30) que comporte ledit moyen de malaxage (3), au voisinage du fond de ladite cuve (2).

13. Malaxeur (1) selon l'une des revendications 1 à 12, **caractérisé en ce que** ladite cuve (2) est revêtue intérieurement d'un revêtement anti-abrasion ou d'un revêtement diamant ou d'un revêtement de vitrification.

14. Procédé de malaxage de matière première pour métallurgie des poudres, en particulier pour la fabrication de granulés feedstock d'un type de céramique donné à partir d'un mélange comportant, d'une part au moins une poudre inorganique d'au moins un élément de type oxyde ou cermet ou métal ou nitrure ou d'au moins un composé comportant au moins un desdits éléments, et d'autre part au moins un liant, selon lequel procédé :
- on équipe un malaxeur (1) comportant au moins un moyen de malaxage (3), et comportant une cuve (2) de réception d'un dit mélange:
- d'une part de moyens de mémorisation (7) pour le stockage de paramètres de température comportant une température inférieure (TINF) et une température supérieure (TSUP) en fonction d'un dit mélange correspondant à un type de céramique donné à réaliser, ladite température inférieure (TINF) à partir de laquelle ledit mélange parvient à l'état pâteux, et ladite température supérieure (TSUP) en-dessous de laquelle doit rester ledit mélange
- et d'autre part de moyens d'échange thermique (4) comportant des moyens de réchauffement (41) agencés pour le chauffage de ladite cuve (2) ou/et de son contenu à une température comprise entre ladite température inférieure (TINF) et ladite température supérieure (TSUP), et lesdits moyens de réchauffement (41) étant agencés pour échanger l'énergie, dans une première connexion, avec un premier circuit (8) d'échange thermique de maintien en température de malaxage, externe à ladite cuve (2), et dont l'inertie thermique dudit premier circuit (8) est supérieure à celle de ladite cuve (2) à pleine charge dudit mélange ;
- on équipe lesdits moyens d'échange thermique (4) dudit malaxeur (1) de moyens de refroidissement (42) qui sont agencés pour échanger l'énergie, dans une deuxième connexion, avec un deuxième circuit (9) à température ambiante, externe à ladite cuve (2), et dont l'inertie thermique est très supérieure à celle de ladite cuve (2) à pleine charge dudit mélange, dans un facteur (K2) supérieur à 2 ;
- on introduit ledit mélange dans ladite cuve (2) dudit malaxeur (1);
- on stabilise en température, par connexion de moyens d'échange thermique (4) audit premier circuit (8) d'échange thermique de maintien en température de malaxage ladite cuve (2) et son contenu au voisinage d'une température de malaxage comprise entre ladite température inférieure (TINF) et ladite température supérieure (TSUP);
- on met en mouvement à vitesse inférieure ou égale à 700 tours par minute ledit moyen de malaxage (3) ;
- on effectue le malaxage dudit mélange jusqu'à l'obtention d'une masse compacte homogène ;
- on arrête la stabilisation à température élevée, supérieure ou égale à une température (T5) propre au mélange considéré et caractéristique d'une masse compacte homogène, de ladite cuve (2) et de son contenu dont on autorise la descente en température.

15. Procédé de malaxage selon la revendication 14, **caractérisé en ce qu'**on équipe ledit malaxeur (1) de moyens de pilotage (5) qui sont connectés à des moyens de mesure (6) et auxdits moyens de mémorisation (7) desdits paramètres de température en fonction du type de matériau à réaliser, et qui pilotent lesdits moyens d'échange thermique (4).

16. Procédé de malaxage selon la revendication 15 ou 16, **caractérisé en ce qu'**on réalise ledit premier circuit (8) avec une inertie thermique supérieure à celle de ladite cuve (2) à pleine charge dudit mélange dans un facteur (K1) supérieur à 2.

17. Procédé de malaxage selon l'une des revendications 14 à 16, **caractérisé en ce que**, quand on arrête la stabilisation à température élevée, supérieure ou égale à une température propre au mélange considéré et caractéristique d'une masse compacte homogène, de ladite cuve et de son contenu, on effectue la descente en température de ladite cuve et de son contenu, soit de façon naturelle, soit par conduite desdits moyens d'échange thermique avec un gradient négatif de température, soit par connexion desdits moyens d'échange thermique à un deuxième circuit à température ambiante voisine de 20°C.

18. Procédé de malaxage selon l'une des revendications 14 à 17, **caractérisé en ce que**, pendant ou après ladite descente en température, on concasse ladite masse compacte, ou bien dans ladite cuve à une température inférieure à 100°C et à vitesse supérieure ou égale à 700 tours par minute dudit moyen de malaxage, ou bien dans une station de concassage annexe audit malaxeur.

19. Procédé de malaxage selon l'une des revendication 14 à 18, **caractérisé en ce qu'**on l'applique à la production de volumes de 5 kg de céramique à base d'oxyde de zirconium, avec les étapes suivantes :
- 100 : on déverse, directement dans ladite cuve (2) ou au niveau d'une alimentation (21) en amont de ladite cuve (2), une première partie d'une charge de poudre et de structurants, comportant de la poudre et des plastiques polymères, on lance un régulateur de température de cuve à la température maximale de T0=180°C par activation desdits moyens de réchauffement (41) et désactivation desdits moyens de refroidissement (42), on démarre la rotation d'un arbre de malaxage (30) dans ladite cuve (2) à une vitesse V0=300 tours par minute ;
- 110: après l'atteinte d'une température T1=145°C et d'une vitesse de rotation de V1=300 tours par minute dudit arbre de malaxage (30), on déverse une deuxième partie constituant le reste de la charge de liants;
- 120 : après l'atteinte d'une température de T2=160°C, on arrête la rotation dudit arbre (30) ;
- on inspecte le contenu de ladite cuve (2) et dudit arbre (30) dont on racle si nécessaire des pales ou/et couteaux que comporte ledit arbre (30) ;
- 130 : on remet en rotation ledit arbre (30) ;
- après l'atteinte d'une température de T3=168°C et d'une vitesse de rotation de V3=700 tours par minute, on arrête la rotation dudit arbre (30) ;
- 135 : on inspecte le contenu de ladite cuve (2) et dudit arbre (30) ;
- 136 : on racle si nécessaire les pales ou/et couteaux que comporte ledit arbre (30) ;
- 140 : on remet en rotation ledit arbre (30), et, après l'atteinte d'une température de TINF=T4=170°C et d'une vitesse de rotation de V4=700 tours par minute, on malaxe le mélange pendant une durée D4 pré-définie propre audit mélange particulier;
- 150 : on mesure la température de la masse compacte obtenue, qui doit être comprise entre T5=180°C et TSUP=T6=190°C (test étape 155), on poursuit le malaxage jusqu'à l'atteinte de cette fourchette de températures ;
- 160: on arrête la rotation dudit arbre (30), on refroidit ladite masse compacte par désactivation desdits moyens de réchauffement (41) et activation desdits moyens de refroidissement (42) ;
- 170: après l'atteinte d'une température comprise entre T7=150°C et T8=180°C (test étape 175), on met en rotation ladite masse compacte pour débloquer les pales/couteaux dudit arbre (30) et/ou améliorer le cisaillement ;
- 180 : on commande des rotations ponctuelles dudit arbre (30) à V9=300 tours par minute pour constituer une galette, et on refroidit ladite galette à une température comprise entre T9=95°C et T10=110°C, ledit refroidissement étant effectué, ou bien par passage en mode refroidissement du système de régulation de température avec un gradient négatif de l'ordre de -2°C par minute, ou bien par désactivation desdits moyens de réchauffement (41) ;
- 190 : on vérifie l'absence de pollution, et on arrêt toute rotation en cas de pollution et alors on effectue une étape 195 dans laquelle on effectue une finition manuelle de la découpe de ladite galette.

20. Procédé selon la revendication 19, **caractérisé en ce qu'**on effectue des refroidissements particuliers lors des étapes suivantes:
- 100 : on lance un régulateur de température de cuve à la température maximale de T0=180°C par activation desdits moyens de réchauffement (41) et désactivation desdits moyens de refroidissement (42),
- 160 : on refroidit ladite masse compacte par désactivation desdits moyens de réchauffement (41) et activation desdits moyens de refroidissement (42);
- 180 : on refroidit ladite galette à une température comprise entre T9=95°C et T10=110°C, ledit refroidissement étant effectué, ou bien par passage en mode refroidissement du système de régulation de température avec un gradient négatif de l'ordre de -2°C par minute, ou bien par désactivation desdits moyens de réchauffement (41) et activation desdits moyens de refroidissement (42).

21. Procédé selon la revendication 19 ou 20, **caractérisé en ce qu'**on utilise un dit malaxeur (1) équipé de moyens de concassage dans ladite cuve (2), et une dite cuve (2) équipée d'un revêtement interne contre l'abrasion, et qu'on effectue après refroidissement de ladite galette les étapes suivantes directement dans ladite cuve (2):
- 200 : concassage à V11=700 tours par minute ;
- 210 : on arrête la rotation dudit arbre (30) ;
- 220 : on évacue le produit obtenu à moins de V12=2000 tours par minute et à moins de T12=85°C.

22. Procédé selon la revendication 21, **caractérisé en ce qu'**on effectue ledit concassage à une vitesse supérieure à 100 tours par minute pour obtenir un farinage du produit sous forme de poudre, permettant son conditionnement en pellets.

23. Procédé selon l'une des revendications 19 à 22, **caractérisé en ce qu'**on le met en oeuvre en utilisant un mélange de matières premières comportant 14% en masse d'un liant qui comporte lui-même 50% en volume d'un matériau constitutif d'une matrice structurante, 42% d'un matériau constitutif d'une matrice fluidisante, et 8% d'un matériau constitutif d'une matrice surfactante.

## Patentansprüche

1. Rührer (1) für die Herstellung von sogenanntem Feedstock-Granulat des keramischen Typs, der einerseits wenigstens ein anorganisches Pulver aus wenigstens einem Element des Oxid-, Cermet-, Metall- oder Nitridtyps oder wenigstens eine Zusammensetzung, die wenigstens eines dieser Elemente enthält, und andererseits wenigstens ein organisches Bindemittel enthält, wobei der Rührer (1) wenigstens einen Bottich (2), in dem wenigstens ein Rührmittel (3) beweglich ist, und Wärmeaustauschmittel (4) umfasst, **dadurch gekennzeichnet, dass** der Rührer Speichermittel (7) zum Speichern von Temperaturparametern umfasst, die eine untere Temperatur (TINF) und eine obere Temperatur (TSUP) enthalten, als Funktion eines Gemisches, das einem herzustellenden gegebenen Keramiktyp entspricht, wobei das Gemisch ausgehend von der unteren Temperatur (TINF) den pastösen Zustand erreicht und wobei das Gemisch unter der oberen Temperatur (TSUP) bleiben muss, und dass die Wärmeaustauschmittel (4) Heizmittel (41) umfassen, die dafür ausgelegt sind, den Bottich (2) und/oder seinen Inhalt auf eine Temperatur zu erhitzen, die zwischen der unteren Temperatur (TINF) und der oberen Temperatur (TSUP) liegt, und ferner **dadurch gekennzeichnet, dass** die Wiedererhitzungsmittel (41) Energie in einer ersten Verbindung mit einem ersten Wärmeaustauschkreis (8) zum Halten der Rührtemperatur außerhalb des Bottichs (2) austauschen, wobei die thermische Trägheit des ersten Kreises (8) größer als jene des Bottichs bei voller Gemischladung ist, und **dadurch gekennzeichnet, dass** die Wärmeaustauschmittel (4) Kühlungsmittel (42) umfassen, die dafür ausgelegt sind, Energie in einer zweiten Verbindung mit einem zweiten Kreis (9) auf Umgebungstemperatur außerhalb des Bottichs (2) auszutauschen, dessen thermische Trägheit viel höher als jene des Bottichs (2) bei voller Gemischladung ist.

2. Rührer (1) nach Anspruch 1, **dadurch gekennzeichnet, dass** der Rührer (1) Steuermittel (5) umfasst, die mit Messmitteln (6) und den Mitteln (7) zum Speichern der Temperaturparameter als Funktion des herzustellenden Materialtyps verbunden sind und die Wärmeaustauschmittel (4) steuern.

3. Rührer (1) nach Anspruch 1 oder 2, **dadurch gekennzeichnet, dass** die thermische Trägheit des ersten Kreises (8) um einen Faktor (K1) größer als 2 größer als jene des Bottichs (2) bei voller Gemischladung ist.

4. Rührer (1) nach einem der Ansprüche 1 bis 3, **dadurch gekennzeichnet, dass** die thermische Trägheit des zweiten Kreises (9) um einen Faktor (K2) größer als 2 größer als jene des Bottichs (2) bei voller Gemischladung ist.

5. Rührer (1) nach Anspruch 2, **dadurch gekennzeichnet, dass** die Steuermittel (5) die Wärmeaustauschmittel (4) in der Weise steuern, dass der Wärmeaustausch mit dem Bottich (2) zu einem gegebenen Zeitpunkt nur von den Kühlungsmitteln (42) oder nur von den Heizmitteln (41) aktiviert wird.

6. Rührer (1) nach Anspruch 2, **dadurch gekennzeichnet, dass** die Steuermittel (5) anhand wenigstens einer Geschwindigkeitsinformation der Rührmittel (3) oder einer Produktmasse während der Transformation durch den Rührer (1) und wenigstens einer Temperaturinformation des Bottichs (2) oder der Produktmasse, die von Sensoren ermittelt werden, die die Messmittel (6) enthalten, einerseits die Drehzahl eines Motors (31), der direkt oder indirekt eine Rührwelle (30) antreibt, die die Rührmittel (3) aufweisen, und andererseits einen Wärmeaustauschdurchsatz durch eine erste Pumpe (81) in dem ersten Kreis (8) der Heizmittel (41) steuern.

7. Rührer (1) nach Anspruch 2, **dadurch gekennzeichnet, dass** dann, wenn die Kühlungsmittel (42) Energie in einer zweiten Verbindung mit einem zweiten Kreis (9) austauschen, die Steuermittel (5) einen Wärmeaustauschdurchsatz durch eine zweite Pumpe (91) in dem zweiten Kreis (9) der Kühlungsmittel (42) steuern.

8. Rührer (1) nach Anspruch 2, **dadurch gekennzeichnet, dass** die Steuermittel (5) dafür ausgelegt sind, einen ersten Regulierer (82), der eine Zufuhr oder eine Entnahme von Wärme zu bzw. von dem ersten Kreis (8) bewerkstelligt, und/oder einen zweiten Regulierer (92), der eine Entnahme oder eine Zufuhr von Wärme von bzw. zu dem zweiten Kreis (9) bewerkstelligt, zu steuern.

9. Rührer (1) nach einem der Ansprüche 1 bis 8, **dadurch gekennzeichnet, dass** der erste Kreis (8) Öl transportiert und dass der zweite Kreis (9) mit Glykol versetztes Wasser transportiert.

10. Rührer (1) nach Anspruch 2, **dadurch gekennzeichnet, dass** die Messmittel (6) einen Temperatursensor (61) in dem ersten Kreis (8) der Heizmittel (41) in dem Bottich (2) oder in dessen unmittelbarer Umgebung, einen Temperatursensor (62) in dem zweiten Kreis (9) der Kühlungsmittel (42) in dem Bottich (2) oder in dessen unmittelbarer Umgebung und einen Drehzahlgeber (63) für die Messung der Drehzahl einer Rührwelle (30), die das Rührmittel (3) aufweist, umfassen.

11. Rührer (1) nach Anspruch 2, **dadurch gekennzeichnet, dass** die Messmittel (6) einen Bewegungssensor (64), der die Bewegung der Paste in dem Bottich (2) beschreibt in der Gestalt eines Sensors für die Drehzahl eines beweglichen Elements (60) hat, das auf dem Boden des Bottichs frei montiert ist, und einen Temperatursensor (65) im Zentrum des Gemisches oder der Paste, der mit dem Bewegungssensor (64) gekoppelt ist, umfassen.

12. Rührer (1) nach Anspruch 2, **dadurch gekennzeichnet, dass** die Messmittel (6) einen Sensor (67) für die Temperatur einer Rührwelle (30), die das Rührmittel (3) aufweist, in der Umgebung des Bodens des Bottichs (2) umfassen.

13. Rührer (1) nach einem der Ansprüche 1 bis 12, **dadurch gekennzeichnet, dass** der Bottich (2) innen mit einer Abriebverhinderungsbeschichtung oder einer Diamantbeschichtung oder einer Verglasungsbeschichtung beschichtet ist.

14. Verfahren zum Mischen einer primären Substanz für Pulvermetallurgie, insbesondere für die Herstellung von Feedstock-Granulat eines gegebenen keramischen Typs ausgehend von einem Gemisch, das einerseits wenigstens ein anorganisches Pulver wenigstens eines Elements des Oxid-, Cermet-, Metall- oder Nitridtyps oder wenigstens eine Zusammensetzung, die wenigstens eines dieser Elemente enthält, und andererseits wenigstens ein Bindemittel umfasst, wobei das Verfahren Folgendes umfasst:
- Ausrüsten eines Rührers (1), der wenigstens ein Rührmittel (3) und einen Bottich (2) für die Aufnahme eines solchen Gemisches umfasst:
- einerseits mit Speichermitteln (7) für die Speicherung von Temperaturparametern, die eine untere Temperatur (TINF) und eine obere Temperatur (TSUP) enthalten, als Funktion eines Gemisches, das einem herzustellenden gegebenen Keramiktyp entspricht, wobei das Gemisch ausgehend von der unteren Temperatur (TINF) den pastösen Zustand erreicht und wobei das Gemisch unter der oberen Temperatur (TSUP) bleiben muss,
- und andererseits mit Wärmeaustauschmitteln (4), die Heizmittel (41) umfassen, die dafür ausgelegt sind, den Bottich (2) und/oder seinen Inhalt auf eine Temperatur zu erhitzen, die zwischen der unteren Temperatur (TINF) und der oberen Temperatur (TSUP) liegt, wobei die Heizmittel (41) dafür ausgelegt sind, Energie in einer ersten Verbindung mit einem ersten Wärmeaustauschkreis (8) zum Halten der Rührtemperatur außerhalb des Bottichs auszutauschen, wobei die thermische Trägheit des ersten Kreises (8) größer als jene des Bottichs (2) bei voller Gemischladung ist;
- Ausrüsten der Wärmeaustauschmittel (4) des Rührers (1) mit Kühlungsmitteln (42), die dafür ausgelegt sind, Energie in einer zweiten Verbindung mit einem zweiten Kreis (9) auf Umgebungstemperatur außerhalb des Bottichs (2) auszutauschen, dessen thermische Trägheit um einen Faktor (K2) größer als 2 viel größer als jene des Bottichs (2) bei voller Gemischladung ist;
- Einleiten des Gemisches in den Bottich (2) des Rührers (1);
- Stabilisieren der Temperatur durch Verbinden der Wärmeaustauschmittel (4) mit dem ersten Wärmeaustauschkreis (8) zum Halten der Rührtemperatur des Bottichs (2) und seines Inhalts in der Umgebung einer Rührtemperatur, die zwischen der unteren Temperatur (TINF) und der oberen Temperatur (TSUP) liegt;
- Versetzen des Rührmittels (3) in eine Bewegung mit einer Drehzahl, die gleich oder kleiner als 700 Umdrehungen pro Minute ist;
- Ausführen des Rührens des Gemisches, bis eine homogene kompakte Masse erhalten wird;
- Anhalten des Stabilisierens auf erhöhter Temperatur, die größer oder gleich einer dem betrachteten Gemisch eigenen Temperatur (T5) ist und für eine homogene kompakte Masse, den Bottich (2) und seinen Inhalt charakteristisch ist, dessen Temperaturabfall zugelassen wird.

15. Mischungsverfahren nach Anspruch 14, **dadurch gekennzeichnet, dass** der Rührer (1) mit Steuermitteln (5) versehen wird, die mit Messmitteln (6) und mit den Mitteln (7) zum Speichern der Temperaturparameter als Funktion des herzustellenden Materialtyps verbunden sind und die die Wärmeaustauschmittel (4) steuern.

16. Mischungsverfahren nach Anspruch 15 oder 16, **dadurch gekennzeichnet, dass** der erste Kreis (8) mit einer thermischen Trägheit verwirklicht ist, die um einen Faktor (K1) größer als 2 höher als jene des Bottichs (2) bei voller Gemischladung ist.

17. Mischungsverfahren nach einem der Ansprüche 14 bis 16, **dadurch gekennzeichnet, dass** dann, wenn die Stabilisierung auf erhöhter Temperatur, die größer oder gleich einer dem betrachteten Gemisch eigenen Temperatur ist, die für eine homogene kompakte Masse, den Bottich und seinen Inhalt charakteristisch ist, angehalten wird, ein Absinken der Temperatur des Bottichs und seines Inhalts entweder auf natürliche Weise oder durch Steuern der Wärmeaustauschmittel mit einem negativen Temperaturgradienten oder durch Verbinden der Wärmeaustauschmittel mit einem zweiten Kreis auf Umgebungstemperatur in der Umgebung von 20 °C ausgeführt wird.

18. Mischungsverfahren nach einem der Ansprüche 14 bis 17, **dadurch gekennzeichnet, dass** während oder nach dem Absenken der Temperatur die kompakte Masse entweder in dem Bottich auf einer Temperatur kleiner als 100 °C und mit einer Drehzahl größer oder gleich 700 Umdrehungen pro Minute des Rührmittels oder in einer an den Rührer angefügten Zerkleinerungsstation zerkleinert wird.

19. Mischungsverfahren nach einem der Ansprüche 14 bis 18, **dadurch gekennzeichnet, dass** es auf die Produktion von Volumina von 5 kg Keramik auf Zirkonoxid-Basis angewendet wird und die folgenden Schritte umfasst:
- 100: Schütten eines ersten Teils einer Ladung aus Pulver und Strukturbildungsmitteln, die Pulver und Polymerkunststoffe enthalten, direkt oder auf Höhe einer Versorgung (21) stromaufseitig des Bottichs (2) in den Bottich, Starten eines Temperaturregulierers für den Bottich für die maximale Temperatur T0 = 180 °C durch Aktivieren der Heizmittel (41) und Deaktivieren der Kühlungsmittel (42) und Beginnen mit der Drehung einer Rührwelle (30) in dem Bottich (2) mit einer Geschwindigkeit V0 = 300 Umdrehungen pro Minute;
- 110: nach Erreichen einer Temperatur T1 = 145 °C und einer Drehzahl V1 = 300 Umdrehungen pro Minute der Rührwelle (30) Schütten eines zweiten Teils, der den Rest der Ladung an Bindemitteln bildet;
- 120: nach Erreichen einer Temperatur T2 = 160 °C Anhalten der Drehung der Welle (30);
- Untersuchen des Inhalts des Bottichs (2) und der Welle (30), deren Schaufeln und/oder Messer, die die Welle (30) trägt, falls notwendig, abgeschabt werden;
- 130: erneutes Versetzen der Welle (30) in Drehung;
- nach Erreichen einer Temperatur T3 = 168 °C und einer Drehzahl V3 = 700 Umdrehungen pro Minute Anhalten der Drehung der Welle (30);
- 135: Untersuchen des Inhalts des Bottichs (2) und der Welle (30);
- 136: falls notwendig, Abschaben der Schaufeln und/oder der Messer, die die Welle (30) aufweist;
- 140: Erneutes Versetzen der Welle (30) in Drehung und nach Erreichen einer Temperatur TINF = T4 = 170 °C und einer Drehzahl V4 = 700 Umdrehungen pro Minute Mischen des Gemisches während einer vordefinierten Dauer D4, die für das besondere Gemisch geeignet ist;
- 150: Messen der Temperatur der erhaltenen kompakten Masse, die im Bereich von T5 = 180 °C und TSUP = T6 = 190 °C liegen muss (Testschritt 155) und Fortsetzen des Rührens, bis dieser Bereich von Temperaturen erreicht ist;
- 160: Anhalten der Drehung der Welle (30), Abkühlen der kompakten Masse durch Deaktivieren der Heizmittel (41) und Aktivieren der Kühlungsmittel (42);
- 170: nach Erreichen einer Temperatur im Bereich von T7 = 150 °C und T8 = 180 °C (Testschritt 175) Versetzen der kompakten Masse in Drehung, um die Schaufeln/Messer der Welle (30) zu befreien und/oder um die Scherung zu verbessern;
- 180: Steuern punktueller Drehungen der Welle (30) mit V9 = 300 Umdrehungen pro Minute, um einen Rohling zu bilden und Abkühlen des Rohlings auf eine Temperatur im Bereich von T9 = 95 °C bis T10 = 110 °C, wobei die Abkühlung entweder durch Übergang in eine Kühlungsbetriebsart des Temperaturregulierungssystems mit einem negativen Gradienten in der Größenordnung von -2 °C pro Minute oder durch Deaktivieren der Heizmittel (41) ausgeführt wird;
- 190: Prüfen der Abwesenheit einer Verunreinigung und Anhalten jeglicher Drehung im Fall einer Verunreinigung und dann Ausführen eines Schrittes 195, in dem eine manuelle Endbearbeitung des Zerschneidens des Rohlings ausgeführt wird.

20. Verfahren nach Anspruch 19, **dadurch gekennzeichnet, dass** besondere Abkühlungen in den folgenden Schritten ausgeführt werden:
- 100: Starten eines Regulierers für die Temperatur des Bottichs auf eine maximale Temperatur T0 = 180 °C durch Aktivieren der Heizmittel (41) und Deaktivieren der Kühlungsmittel (42),
- 160: Abkühlen der kompakten Masse durch Deaktivieren der Heizmittel (41) und Aktivieren der Kühlungsmittel (42);
- 180: Abkühlen des Rohlings auf eine Temperatur im Bereich von T9 = 95 °C bis T10 = 110 °C, wobei die Abkühlung entweder durch Übergang in eine Abkühlungsbetriebsart des Temperaturregulierungssystems mit einem negativen Gradienten in der Größenordnung von -2 °C pro Minute oder durch Deaktivieren der Heizmittel (41) und Aktivieren der Kühlungsmittel (42) ausgeführt wird.

21. Verfahren nach Anspruch 19 oder 20, **dadurch gekennzeichnet, dass** ein Rührer (1), der mit Zerkleinerungsmitteln in dem Bottich (2) ausgerüstet ist, und ein Bottich (2), der mit einer inneren Beschichtung gegen Abrieb versehen ist, verwendet werden und dass nach dem Abkühlen des Rohlings die folgenden Schritte direkt in dem Bottich (2) ausgeführt werden:
- 200: Zerkleinern mit V11 = 700 Umdrehungen pro Minute;
- 210: Anhalten der Drehung der Welle (30);
- 220: Entnehmen des erhaltenen Produkts mit wenigstens V12 = 2000 Umdrehungen pro Minute und wenigstens T12 = 85 °C.

22. Verfahren nach Anspruch 21, **dadurch gekennzeichnet, dass** die Zerkleinerung mit einer Geschwindigkeit größer als 100 Umdrehungen pro Minute erfolgt, um eine Kreidung des Produkts in Form von Pulver zu erhalten, was seine Verpackung in Pellets erlaubt.

23. Verfahren nach einem der Ansprüche 19 bis 22, **dadurch gekennzeichnet, dass** es unter Verwendung eines Gemisches von primären Substanzen ausgeführt wird, die 14 Masse-% eines Bindemittels enthalten, das seinerseits 50 Vol.-% eines einen strukturbildenden Grundstoff bildenden Materials, 42 % eines einen fluidisierenden Grundstoff bildenden Materials und 8 % eines einen oberflächenbildenden Grundstoff bildenden Materials enthält.

## Claims

1. Mixer (1) for the manufacture of ceramic type pellets known as feedstock including, on the one hand, at least one inorganic powder of at least one oxide or cermet or metal or nitride type element or of at least one compound including at least one of said elements, and on the other hand, at least one organic binder, said mixer (1) including at least one tank (2) in which at least one mixing means (3) is movable, and including heat exchange means (4), **characterized in that** said mixer includes storage means (7) for storing temperature parameters including a lower temperature (TINF) and a higher temperature (TSUP) for a mixture corresponding to a given type of ceramic to be produced, said lower temperature (TINF) above which said mixture becomes a paste, and said higher temperature (TSUP) below which said mixture must remain, and **in that** said heat exchange means (4) includes heating means (41) arranged for heating said tank (2) and/or the content thereof to a temperature comprised between said lower temperature (TINF) and said higher temperature (TSUP), and further **characterized in that in that** said heating means (41) exchange energy, in a first connection, with a first heat exchange and mixing temperature maintenance circuit (8), external to said tank (2), and wherein the thermal inertia of said first circuit (8) is higher than that of said tank (2) fully loaded with said mixture, and **characterized in that** said heat exchange means (4) include cooling means (42) which are arranged to exchange energy, in a second connection, with a second ambient temperature circuit (9), external to said tank (2), and whose thermal inertia is far higher than that of said tank (2) fully loaded with said mixture.

2. Mixer (1) according to claim 1, **characterized in that** said mixer (1) includes control means (5) which are connected to measuring means (6) and to said means (7) for storing said temperature parameters according to the type of material to be produced, and which control said heat exchange means (4).

3. Mixer (1) according to claim 1 or 2, **characterized in that** the thermal inertia of said first circuit (8) is higher than that of said tank (2) fully loaded with said mixture by a first factor (K1) greater than 2.

4. Mixer (1) according to any of claims 1 to 3, **characterized in that** the thermal inertia of said second circuit (9) is far higher than that of said tank (2) fully loaded with said mixture by a second factor (K2) greater than 2.

5. Mixer (1) according to claim 2, **characterized in that** said control means (5) control said heat exchange means (4) so as to activate heat exchange with said tank (2) at a given moment, by means only of the cooling means (42) or by means only of said heating means (41).

6. Mixer (1) according to claim 2, **characterized in that** said control means (5), based on at least one piece of information regarding the speed of said mixing means (3) or of a mass of product undergoing transformation by said mixer (1), and at least one piece of information regarding the temperature of said tank (2) or of said mass of product, measured by sensors comprised in said measuring means (6), control on the one hand, the speed of a motor (31) directly or indirectly driving a mixing shaft (30) comprised in said mixing means (3), and on the other hand, a heat exchange rate by a first pump (81) in said first circuit (8) of said heating means (41).

7. Mixer (1) according to claim 2, **characterized in that** when said cooling means (42) exchange energy, in a second connection, with a second circuit (9), said control means (5) control a heat exchange rate by a second pump (91) in said second circuit (9) of said cooling means (42).

8. Mixer (1) according to claim 2, **characterized in that** said control means (5) are arranged to control a first regulator (82) adding heat to or removing heat from said first circuit (8), and/or a second regulator (92) removing heat from or adding heat to said second circuit (9).

9. Mixer (1) according to any of claims 1 to 8, **characterized in that** said first circuit (8) conveys oil, and **in that** said second circuit (9) conveys glycol-water.

10. Mixer (1) according to claim 2, **characterized in that** said measuring means (6) include a temperature sensor (61) in said first circuit (8) of said heating means (41), in said tank (2) or in immediate proximity thereto, a temperature sensor (62) in said second circuit (9) of said cooling means (42), in said tank (2), or in immediate proximity thereto, and a tachymeter generator (63) for measuring the rotational speed of a mixing shaft (30) comprised in said mixing means (3).

11. Mixer (1) according to claim 2, **characterized in that** said measuring means (6) include a motion sensor (64) characterizing the motion of the paste in said tank (2), in the form of a rotational speed sensor of a moving part (60) freely mounted on the bottom of the tank, and a temperature sensor (65) inside the mixture or the paste, coupled to said motion sensor (64).

12. Mixer (1) according to claim 2, **characterized in that** said measuring means (6) include a temperature sensor (67) of a mixing shaft (30) comprised in said mixing means (3), in proximity to the bottom of said tank (2).

13. Mixer (1) according to any of claims 1 to 12, **characterized in that** said tank (2) is internally coated with an anti-abrasion coating or with a diamond coating or with a vitrified coating.

14. Method of mixing raw material for powder metallurgy, in particular for manufacturing a given type of ceramic feedstock pellets from a mixture including, on the one hand, at least one inorganic powder of at least one oxide or cermet or metal or nitride type element or of at least one compound including at least one of said elements and, on the other hand, at least one binder, according to which method:
- a mixer (1) comprising at least one mixing means (3) and comprising a tank (2) for receiving a said mixture is equipped with:
- on the one hand storage means (7) for storing temperature parameters including a lower temperature (TINF) and a higher temperature (TSUP) for a said mixture for a given type of ceramic to be produced, said lower temperature (TINF) above which said mixture becomes a paste, and said higher temperature (TSUP) below which said temperature must remain;
- and on the other hand, heat exchange means (4) comprising heating means (41) arranged for heating said tank (2) and/or the content thereof to a temperature comprised between said lower temperature (TINF) and said higher temperature (TSUP), and said heating means (41) being arranged to exchange energy, in a first connection, with a first heat exchange and mixing temperature maintenance circuit (8), external to said tank (2), and wherein the thermal inertia of said first circuit (8) is higher than that of said tank (2) fully loaded with said mixture;
- said heat exchange means (4) of said mixer (1) are equipped with cooling means (42) which are arranged to exchange energy, in a second connection, with a second ambient temperature circuit (9) external to said tank (2), and whose thermal inertia is far higher than that of said tank (2) fully loaded with said mixture, by a factor (K2) greater than 2;
- said mixture is introduced into said tank (2) of said mixer (1);
- the temperature of said tank (2) and the content thereof is stabilized, by connecting a heat exchange means (4) to a first heat exchange and mixing temperature maintenance circuit (8), close to a mixing temperature comprised between said lower temperature (TINF) and said higher temperature (TSUP);
- said mixing means (3) is set in motion at a speed lower than or equal to 700 revolutions per minute;
- said mixture is mixed until a compact homogeneous mass is obtained;
- the temperature stabilisation of said tank (2) and the content thereof for which a reduction in temperature has been authorised is stopped at a high temperature equal to or above a temperature (T5) which is specific to the mixture concerned and characteristic of a compact homogeneous mass, and a reduction in temperature of said tank (2) and the content thereof is then authorised.

15. Mixing method according to claim 14, **characterized in that** said mixer (1) is equipped with control means (5) which are connected to measuring means (6) and to said means (7) of storing said temperature parameters according to the type of material to be produced, and which control said heat exchange means (4).

16. Mixing method according to claim 15 or 16, **characterized in that** said first circuit (8) is made with a higher thermal inertia than that of said tank (2) fully charged with said mixture by a factor (K1) greater than 2.

17. Mixing method according to any of claims 14 to 16, **characterized in that**, when the temperature stabilization of said tank and the content thereof is stopped at a high temperature above or equal to a temperature specific to the mixture concerned and characteristic of a compact homogeneous mass, the temperature of said tank and the content thereof is reduced, either naturally, or by controlling said heat exchange means (4) with a negative temperature gradient, or by connecting said heat exchange means to a second ambient temperature circuit close to 20°C.

18. Mixing method according to claims 14 to 17, **characterized in** during or after said reduction in temperature, said compact mass is crushed, either in said tank at a temperature below 100°C and at a speed of said mixing means higher than or equal to 700 revolutions per minute, or in a crushing station adjacent to said mixer.

19. Method according to any of claims 14 to 18, **characterized in that** the method is applied to the production of 5kg volumes of zirconium oxide based ceramic, with the following steps:
- 100: a first part of a load of powder and structurants, including powder and polymer plastics, is poured directly into said tank (2) or into a feeder (21) upstream of said tank (2), a tank temperature regulator is started at a maximum temperature of T0=180°C by activating said heating means (41) and deactivating said cooling means (42), the rotation of a mixing shaft (30) in said tank (2) is started at a speed V0=300 rpm;
- 110: once a temperature T1=145°C and a speed of rotation of V1=300 rpm for said mixing shaft (30) are attained, a second part forming the remainder of the binder load is added;
- 120: once a temperature T2=160°C is attained, the rotation of said shaft (30) is stopped;
- the content of said tank (2) and said shaft (30) is inspected and if necessary the paddles or/and blades comprised in said shaft (30) are scraped;
- 130: said shaft (30) is set in motion again;
- once a temperature T3=168°C and a speed of rotation V3=700 rpm are attained, the rotation of said shaft (30) is stopped;
- 135: the content of said tank (2) and said shaft (30) are inspected;
- 136: if necessary the paddles or/and the blades comprised in said shaft (30) are scraped;
- 140: said shaft (30) is rotated again, and once a temperature TINF=T4=170°C and a speed of rotation V4=700 rpm are attained, the mixture is mixed for a predefined duration D4 specific to the particular mixture;
- 150: the temperature of the compact mass obtained, which must be comprised between T5=180°C and TSUP=T6=190°C (test step 155), is measured and mixing continues until this temperature range is reached;
- 160: rotation of said shaft (30) is stopped, said compact mass is cooled by deactivating said heating means (41) and activating said cooling means (42);
- 170: once a temperature comprised between T7=150°C and T8=180°C (test step 175) is attained, said compact mass is set in rotation to unblock the paddles/blades of said shaft (30) and/or to improve shearing;
- 180: occasional rotations of said shaft (30) are controlled at V9=300 rpm to form a "cake", and said "cake" is cooled to a temperature comprised between T9=95°C and T10=110°C, said cooling being accomplished either by switching the temperature regulation system to cooling mode, with a negative gradient of around -2°C per minute, or by deactivating said heating means (41).
- 190: the presence of contamination is checked and all rotation is stopped if contamination is present, a step 195 is then performed in which the cutting of said "cake" is finished manually.

20. Method according to claim 19, **characterized in that** specific cooling is carried out in the following steps:
- 100: a tank temperature regulator is started at a maximum temperature T0=180°C by activating said heating means (41) and deactivating said cooling means (42);
- 160: said compact mass is cooled by deactivating said heating means (41) and activating said cooling means (42);
- 180: said "cake" is cooled to a temperature comprised between T9=95°C and T10=110°C, said cooling being carried out either by switching the temperature regulation system to cooling mode, with a negative gradient of around -2°C per minute, or by deactivating said heating means (41) and activating said cooling means (42).

21. Method according to claim 19 or 20, **characterized in that** a said mixer (1) is used, equipped with a crushing means inside said tank (2), and a said tank (2), equipped with an internal anti-abrasion coating, and **in that** after the cooling of said "cake", the following steps are carried out directly in said tank (2):
- 200: crushing at V11=700 rpm.
- 210: the rotation of said shaft (30) is stopped.
- 220: the product obtained is evacuated at less than V12=2000 rpm at less than T12=85 °C.

22. Method according to claim 21, **characterized in that** said crushing is carried out a speed higher than 100 rpm to obtain flour from the product in powder form, allowing the formation of pellets.

23. Method according to any of claims 19 to 22, **characterized in that** the method is applied to a mixture of raw materials including 14% by mass of binder which in turn includes 50% by volume of material forming a structural matrix, 42% of material forming a fluidising matrix, and 8% of material forming a surfactant matrix.
